**Europäisches Patentamt**

**European Patent Office**

**Office européen des brevets**

(19)

(11) Veröffentlichungsnummer: **0 018 462**
**B1**

(12) **EUROPÄISCHE PATENTSCHRIFT**

(45) Veröffentlichungstag der Patentschrift: **18.05.83**

(51) Int. Cl.³: **B 60 C 11/06**

(21) Anmeldenummer: **79890003.1**

(22) Anmeldetag: **04.05.79**

(54) Lauffläche für einen Luftreifen.

(43) Veröffentlichungstag der Anmeldung:
**12.11.80 Patentblatt 80/23**

(45) Bekanntmachung des Hinweises auf die Patenterteilung:
**18.05.83 Patentblatt 83/20**

(84) Benannte Vertragsstaaten:
**AT CH FR GB IT NL**

(56) Entgegenhaltungen:
**DE - A - 2 035 714
DE - B - 1 261 419
FR - A - 982 784
FR - A - 2 383 029
GB - A - 1 203 400
US - A - 3 405 753**

**GUMMIBEREIFUNG, Vol. 53, Nr. 11, November
1977, Bielefeld, "rallye 280, 155SR13, Seiten
22—24**

(73) Patentinhaber: **Semperit Aktiengesellschaft
Wiedner Hauptstrasse 63
A-1041 Wien (AT)**

(72) Erfinder: **Hanke, Wolfgang, Dr.
Trubelgasse 19/14
A-1030 Wien (AT)**

Courier Press, Leamington Spa, England.

Lauffläche für einen Luftreifen

Die Erfindung betrifft eine Lauffläche für einen Luftreifen mit zwei inneren, in Umfangsrichtung des Reifens verlaufenden, durch eine mittlere zick-zack-förmige Umfangsnut getrennten Rippen- oder Blockreihen und beidseits davon angeordneten, in Umfangsrichtung des Reifens verlaufenden äußeren Blockreihen, die von den inneren Rippen- oder Blockreihen durch seitliche zick-zack-förmige Umfangsnuten getrennt sind.

Derartige bekannte Reifen sind für den Winter- und Geländeeinsatz konzipiert und sollen durch eine grobgliedrige Gestaltung des Profiles insbesondere den Schneegriff verbessern. Der durch den Druck des Reifens komprimierte Schnee bildet dabei in den Profilnuten ein besonders hochverdichtetes Gerippe, wodurch ähnlich der Kraftübertragung zwischen Zahnrad und Zahnstange die Motorkraft des Fahrzeuges weitgehend verlustfrei auf die Straße übertragen werden soll.

Bekannte Ausführungen der eingangs beschriebenen Lauffläche weisen drei gleiche zick-zack-förmige Umfangsnuten auf. Da im Bereich der Aufstandsfläche des Reifens der auf die Fahrbahn einwirkende Aufstandsdruck von PKW-Reifen im Schulterbereich größer als in der Laufflächenmitte ist, kommt eine unterschiedliche Schneeverdichtung in den genannten Umfangsnuten zustande. Als Folge davon kommt es zu einer Schwächung der Traktion, da praktisch nur die beiden äußeren Umfangsnuten arbeiten.

Bekannt ist auch aus der FR—A—982.784 eine Laufflächenprofilierung für einen Reifen mit zwei mittigen, zick-zack-förmigen Umfangsnuten und beidseits dazu je zwei in Reifenumfangsrichtung verlaufenden Blockreihen. Dieses Laufflächenprofil weist somit fünf Umfangsrillen auf, wobei die mittigen drei gleichgewinkelt sind. Aufgrund dieser gleichen und zur Umfangsrichtung nur schwach geneigten Zick-Zack-Führung der mittigen drei Umfangsrillen kann von einem derartigen Laufflächenprofil nur ein schlechter Schneegriff erwartet werden.

Weiters ist aus der Zeitschrift Gummibereifung Nr. 11/1977 ein Reifen (Uniroyal Rallye 280) der im Oberbegriff des Anspruchs 1 beschriebenen Art bekannt. Die dort dargestellte Reifenlauffläche besitzt zwei mittige Umfangsrippen, die durch eine zick-zack-förmige Zentralnut getrennt sind. Zur Schulter zu schließen Blockreihen an, die durch eine sägezahnartige Nut von den zentralen Umfangsrippen getrennt sind. Durch die verschiedene Neigung der Schenkelabschnitte dieser sägezahnartigen Nuten kommt es beim Fahren auf Schnee zu einer unterschiedlichen Schneekompression in diesen Nuten und damit zu einem diesbezüglich beeinträchtigten Traktionsverhalten.

Das Ziel der vorliegenden Erfindung liegt in der Verbesserung der einleitend beschriebenen Lauffläche, indem die im Bereich des geringeren Aufstandsdruckes liegende mittlere Umfangsnut vollständig zur Erhöhung der Traktion beiträgt und die Lauffläche sich des weiteren durch besonders günstige Eigenschaften in bezug auf Schneematsch-drainage, Geradeauslaufstabilität, geringerem Rollwiderstand und gutem Selbstreinigungsvermögen auszeichnet.

Die Lauffläche ist erfindungsgemäß dadurch gekennzeichnet, daß die Schenkel der mittleren Umfangsnut mit der Umfangsrichtung des Reifens jeweils einen positiven bzw. negativen Winkel $\alpha$ von 30 bis 50 Grad, die Schenkel der seitlichen Umfangsnuten mit der Umfangsrichtung jeweils einen positiven bzw. negativen Winkel $\beta$ von etwa 55 bis 65 Grad einschließen und wobei die seitlichen Umfangsnuten jeweils breiter sind als die mittlere.

Infolge der höheren Schneeaufnahmekapazität der im Vergleich zur mittleren Umfangsnut breiteren und infolge der größeren Abwinkelung zur Umfangsrichtung auch längeren seitlichen Umfangsnuten ist die Verdichtung trotz des höheren Aufstandsdruckes nicht größer als in der mittleren, schmäleren Umfangsnut. Damit wird die gesamte Kontaktfläche der Schneefahrbahn mit der Lauffläche des Reifens gleichmäßig auf Scherung beansprucht, was zu einer besonders guten Traktion sowohl in Umfangs- als auch in Axialrichtung führt. Durch die zur Axialrichtung symmetrische Zick-Zack-Winkelung der Umfangsnuten ist ein über den gesamten Reifenumfang gleichmäßiges Griff-, Abrieb- und Dränageverhalten gegeben.

Die breiten, seitlichen Umfangsnuten kommen sowohl infolge ihrer großen Breite in axialer Richtung als auch in zur Nutlängsrichtung normaler Richtung ihrer Funktion als Schneematschableitung optimal nach, sodaß jedweder dem Aquaplaning ähnlicher Effekt der Anhebung des Reifens und folgender Kontaktverlust mit der Fahrbahn von vornherein vermindert wird.

Ein Winkel $\alpha$ von weniger als 30 Grad hätte eine sehr schwache Zick-Zack-Ausbildung und damit eine sehr eingeschränkte Traktionsfähigkeit des Reifens in Umfangsrichtung zur Folge, während ein Winkel $\alpha$ von über 50 Grad wohl eine gute Traktion in Umfangsrichtung bringen würde, andererseits geht jedoch damit die ein Abgleiten in axialer Richtung unterbindende Seitenstabilität fast zur Gänze verloren.

Eine vorteilhafte Ausbildung der erfindungemäßen Lauffläche besteht darin, die mittlere Umfangsnut jeweils nach drei aufeinanderfolgenden Schenkeln mit einer den vierten Schenkel etwa in dessen Richtung verlängernden Querverbindung mit den seitlichen Umfangsnuten zu verbinden. Als Folge davon ergibt sich eine feingliedrige Profilierung, verbunden mit einer Reduzierung des Rollwiderstandes und damit einer Einsparung im Kraftstoffverbrauch. Parallel dazu is eine Minderung des Laufgeräusches gegeben, da die zur Axialrichtung der Lauffläche geneigten Nuten dafür sorgen, daß die Profilblockkanten jeweils nur in einer minimalen Länge auf die Fahrbahn auftreffen. Außerdem lassen sich dadurch die für das Fahrwerk äußerst nachteiligen Resonanzschwingungen weitestgehend eliminieren.

Weisen die Querverbindungen etwa die gleiche Breite wie die mittlere Umfangsnut auf, so ist eine besonders gute Schneematschableitung sowie eine Verbesserung der Traktion in Umfangs und in Axialrichtung infolge der breiten, quer durch die gesamte Lauffläche führenden Querverbindungsnut gegeben.

Im folgenden wird die Erfindung anhand von Zeichnungen beispielhaft näher erläutert.

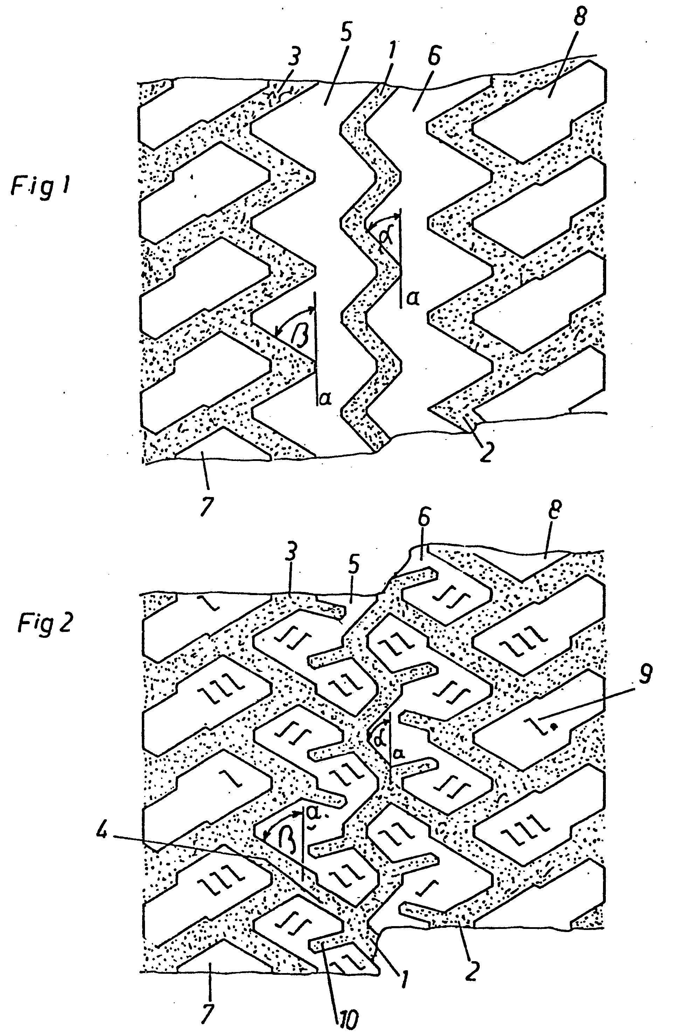

Es zeigen die Fig. 1 und 2 Laufflächen entsprechend dem Erfindungsmerkmal.

Die zwischen den Umfangsnuten 1, 2, 3 liegende Lauffläche besteht aus durchgehenden, zick-zack-förmigen Rippen 5, 6, wobei die beiden seitlichen Umfangsnuten 2, 3 im Vergleich zur mittleren Umfangsnut 1 breiter sind und mit der Umfangsrichtung a des Reifens einen größeren Winkel $\beta$ einschließen.

An die beiden Rippen 5, 6 schließt jeweils eine Blockreihe 7, 8 an.

Die Querverbindungen 4 in Fig. 2 verbinden die beiden seitlichen Umfangsnuten 2, 3 mit der mittleren und unterteilen die Rippen 5, 6 in einzelne Blöcke. Die Sackrillen 10 tragen zur Erhöhung der Traktion bei und verkürzen durch Auflockerung der Blöcke den Bremsweg. Die Feinschnitte 9 erhöhen die Flexibilität der einzelnen Blöcke.

**Patentansprüche**

1. Lauffläche für einen Luftreifen mit zwei inneren in Umfangsrichtung des Reifens verlaufenden, durch eine mittlere zick-zack-förmige Umfangsnut (1) getrennten Rippen- oder Blockreihen (5, 6) und beidseits davon angeordneten in Umfangsrichtung des Reifens verlaufenden äußeren Blockreihen (7, 8), die von den inneren Rippen- oder Blockreihen (5, 6) jeweils durch seitliche zick-zack-förmige Umfangsnuten (2, 3) getrennt sind, dadurch gekennzeichnet, daß die Schenkel der mittleren Umfangsnut (1) mit der Umfangsrichtung (a) des Reifens jeweils einen positiven bzw. negativen Winkel ($\alpha$) von etwa 30 bis 50°, die Schenkel der seitlichen Umfangsnuten (2, 3) mit der Umfangsrichtung (a) jeweils einen positiven bzw. negativen Winkel ($\beta$) von etwa 55 bis 65° einschließen und wobei die seitlichen Umfangsnuten (2, 3) jeweils breiter sind als die mittlere Umfangsnut (1).

2. Lauffläche nach Anspruch 1, dadurch gekennzeichnet, daß die mittlere Umfangsnut (1) jeweils nach drei aufeinanderfolgenden Schenkeln eine den vierten Schenkel etwa in dessen Richtung verlängernde Querverbindung (4) zu den seitlichen Umfangsnuten (2, 3) aufweist.

3. Lauffläche nach Anspruch 2, dadurch gekennzeichnet, daß die Querverbindung (4) etwa die gleiche Breite wie die mittlere Umfangsnut (1) aufweist.

**Revendications**

1. Bande de roulement pour bandage pneumatique, comprenant deux rangées intérieures de nervures ou de blocs (5, 6) s'étendant dans la direction de la périphérie du bandage et séparées par une rainure périphérique médiane (1) en forme de zig-zag, et, des deux côtés de ces nervures ou blocs, des rangées extérieures de blocs (7, 8) s'étendant dans la direction de la périphérie du bandage et qui sont séparées respectivement des rangées intérieures de nervures ou de blocs (5, 6) par des rainures périphériques latérales (2, 3) en forme de zigzag, caractérisée en ce que les branches de la rainure périphérique médiane (1) font chacune avec la direction (a) de la périphérie du bandage un angle ($\alpha$) positif ou négatif d'environ 30 à 50°, les branches des rainures périphériques latérales (2, 3) font chacune avec cette même direction (a) un angle ($\beta$) positif ou négatif d'environ 55 à 65°, les rainures périphériques latérales (2, 3) étant chacune plus large que la rainure périphérique médiane (1).

2. Bande de roulement selon la revendication 1, caractérisée en ce que la rainure périphérique médiane (1) comporte chaque fois après trois branches successives une liaison transversale (4) prolongeant la quatrième branche approximativement dans sa direction, jusqu'aux rainures périphériques latérales (2, 3).

3. Bande de roulement selon la revendication 2, caractérisée en ce que la liaison transversale (4) a à peu près la même largeur que la rainure périphérique médiane (1).

**Claims**

1. A piecewise tyre tread having two inner rib or block rows (5, 6) which run in the circumferential direction of the tyre and are separated by a central zigzag circumferential groove (1), and outer block rows (7, 8) which are arranged on either side of said rib or block rows (5, 6), run in the circumferential direction of the tyre and are respectively separated from the inner rib or block rows (5, 6) by side zigzag circumferential grooves (2, 3), characterised in that the angled sections of the central circumferential groove (1) make an angle ($\alpha$), positive or negative as the case may be, of approximately 30 to 50° with the circumferential direction (a) of the tyre; the angled sections of side circumferential grooves (2, 3) make an angle ($\beta$), positive or negative as the case may be, of approximately 55 to 65° with the circumferential direction (a), the side circumferential grooves (2, 3) being respectively wider than the central circumferential groove (1).

2. A tread according to Claim 1, characterised in that after three successive angled sections, the central circumferential groove (1) has a cross connection (4) to the side circumferential grooves (2, 3) which extends the fourth angled section approximately in the direction thereof.

3. A tread according to Claim 2, characterised in that the cross connection (4) has approximately the same width as the central circumferential groove (1).

0 018 462

Fig 1

Fig 2